# EUROPEAN PATENT SPECIFICATION

(11) **EP 1 695 646 B1**
(45) Date of publication and mention of the grant of the patent: **14.05.2008**
(21) Application number: 06250254.7
(22) Date of filing: 18.01.2006
(51) Int. Cl.: A47J 43/10

(54) **Culinary whisk**
Rührbesen
Fouet

(30) Priority: 23.02.2005 GB 0503757
(43) Date of publication of application: 30.08.2006
(73) Proprietor: Maxpat Trading & Marketing (Far East) Limited, Tsimshatsui, Hong Kong (CN)
(72) Inventor: Fung, Kwok Onn, ShaPing Town, HeShan GuangDong (CN)
(74) Representative: Howe, Steven

(56) References cited:
- EP-A- 1 093 748
- DE-C- 454 434
- PATENT ABSTRACTS OF JAPAN vol. 1999, no. 04, 30 April 1999 (1999-04-30) & JP 11 018966 A (SEKIKAWA YOSHIKO), 26 January 1999 (1999-01-26)
- PATENT ABSTRACTS OF JAPAN vol. 2003, no. 12, 5 December 2003 (2003-12-05) & JP 2004 357936 A (TAKATORI HAJIME), 24 December 2004 (2004-12-24)

## Description

### Field of Invention

The present invention is concerned with an improved culinary whisk.

### Background of the Invention

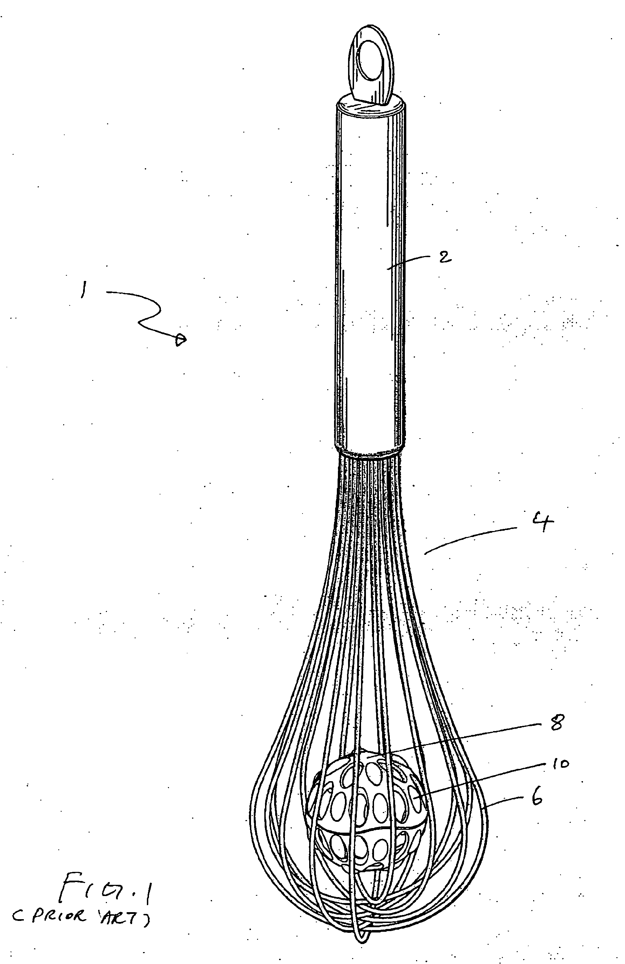

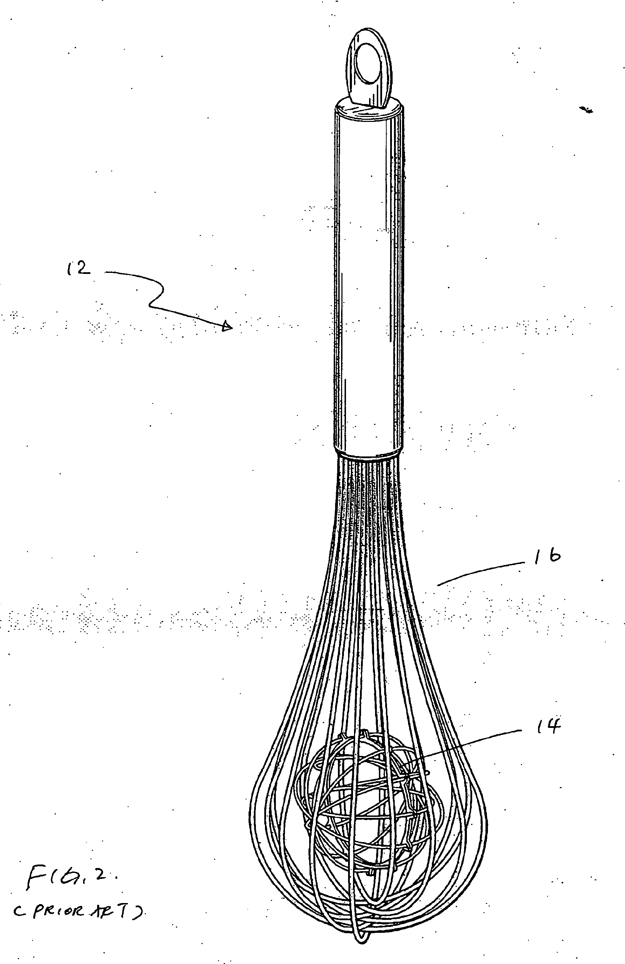

There are a variety of culinary whisks, the most common type being a so-called balloon whisk comprising a handle connected to a number of wire loops. In order to enhance the whisking efficiency, it is desirable to form such with a large number of wire loops. However, this would increase the manufacture cost and these whisks are often difficult to clean after use due to increased number of wires. For this reason, it has been proposed to introduce an independent object within the wire loops, which as the whisk is moved backward and forward can move independently and increase the efficiency of beating. Such whisks, as disclosed in e.g. JP-11-018966 are shown in Figures 1 and 2. Figure 1 shows a whisk 1 having an elongate handle portion 2 and a utility portion 4 formed of a plurality of wire loops 6. A spherical plastics object 8 having a number of relatively large openings 10 is provided. Figure 2 similarly shows a whisk 12 having an object 14 formed of wires within a utility portion 16. However, such whisks 1, 12 still are unsatisfactory particularly due to increased cost of production of the additional independent component (the round-shaped object 8, 14).

The present invention is directed to address the above problems, to provide an improved whisk or at least to provide an alternative to the public.

### Summary of the Invention

According to the present invention, there is provided a culinary whisk comprising a handle, a plurality of wire loops extending from the handle defining a balloon-shaped utility portion and an internal body disposed within the utility portion formed integrally with the plurality of wire loops. The wire loops may preferably be made of stainless steel although other inert materials suitable for making cooking utensils may also be used.

Preferably, the internal body may be of a generally spherical shape, although other suitable shapes such an egg shape would equally work. Spherical-shaped internal bodies can enhance the whisking efficiency.

Suitably, the internal body may be constituted of portions or parts of the loops defining a three-dimensional body. The internal body may be arranged at an end of the utility portion away from the handle to enhance the whisking efficiency.

Advantageously, the utility portion may be formed of six or seven wire loops. These numbers of wire loops are suitable for most handheld culinary whisks. If there were too many wire loops (e.g. 12), foodstuffs to mixed would be difficult to enter into and exit out of the utility portion and thus the whisking efficiency might be comprimised.

If there were not enough wire loops then the whisk would not be able to mix the foodstuffs effectively.

Preferably, the utility portion may comprise a neck region adjacent to the handle, and the neck region may generally be cylindrical in shape with a width or diameter comparable to or slightly smaller than that of the handle. Alternatively, the utility portion may also be provided with a middle region generally arranged between the neck region and the internal body yet alternatively, the utility portion may be provided with a middle region arranged adjacent to the neck region, the middle region having a width substantially larger than that of the neck region or comparable to that of the internal body. The middle region may be arranged between the neck region of the handle and a front enlarged region of the utility portion. The provision of the wider middle region in addition to the front enlarged region in the utility portion may be particularly suitable for whisking in a relatively large and deep container filled with foodstuffs in that a greater portion of the utility portion is immersed in the foodstuffs. The wider middle region facilitate the mixing of the foodstuffs.

The internal body may be arranged at an end of the utility portion away from the handle.

### Brief Description of the Drawings

Embodiments of the present invention are described, by way of example only, with reference to the following drawings in which:
Figure 1 is a perspective view of a prior art whisk;
Figure 2 is a perspective view of another prior art whisk;
Figure 3 is a perspective view of a whisk according to a first embodiment of the present invention;
Figure 4 is a side view of the whisk in Figure 3;
Figure 5 is another side view of the whisk in Figure 3;
Figure 6 is a schematic diagram showing one wire loop of the whisk in Figure 3; and
Figure 7 is a perspective view of a whisk according to a second embodiment of the present invention.

### Detailed Description of the Preferred Embodiments

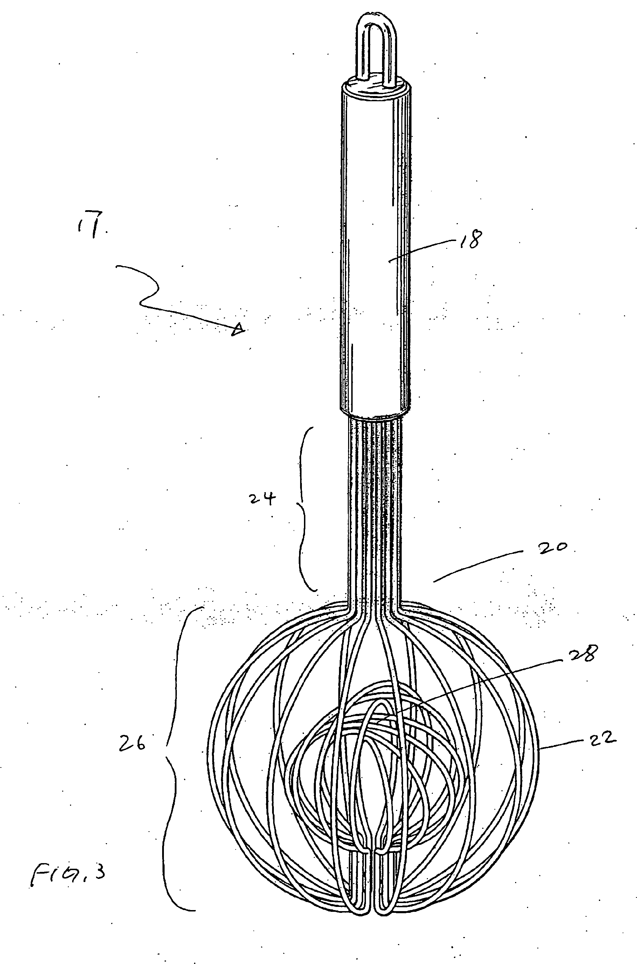

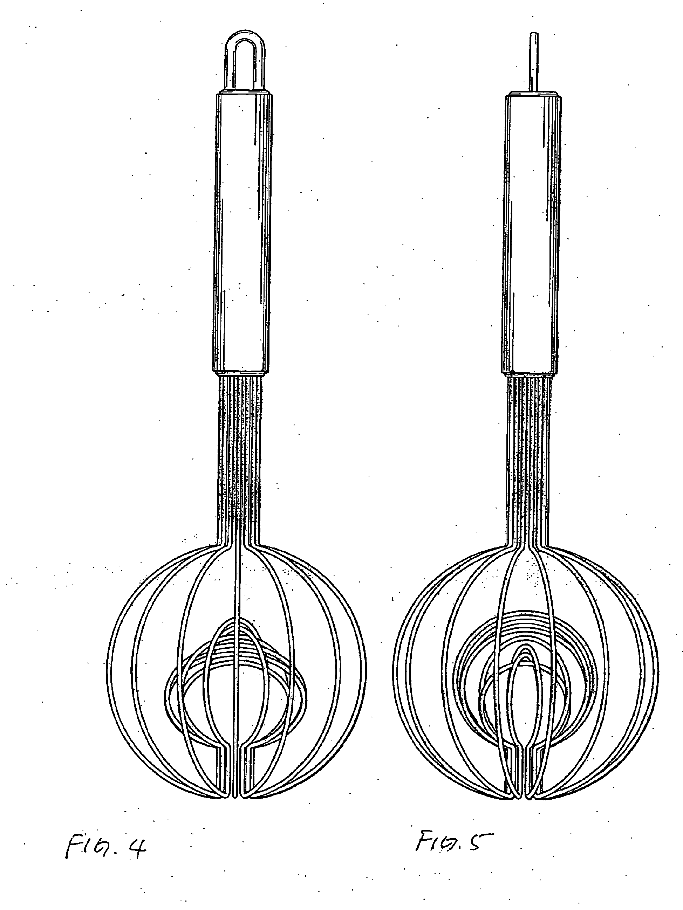

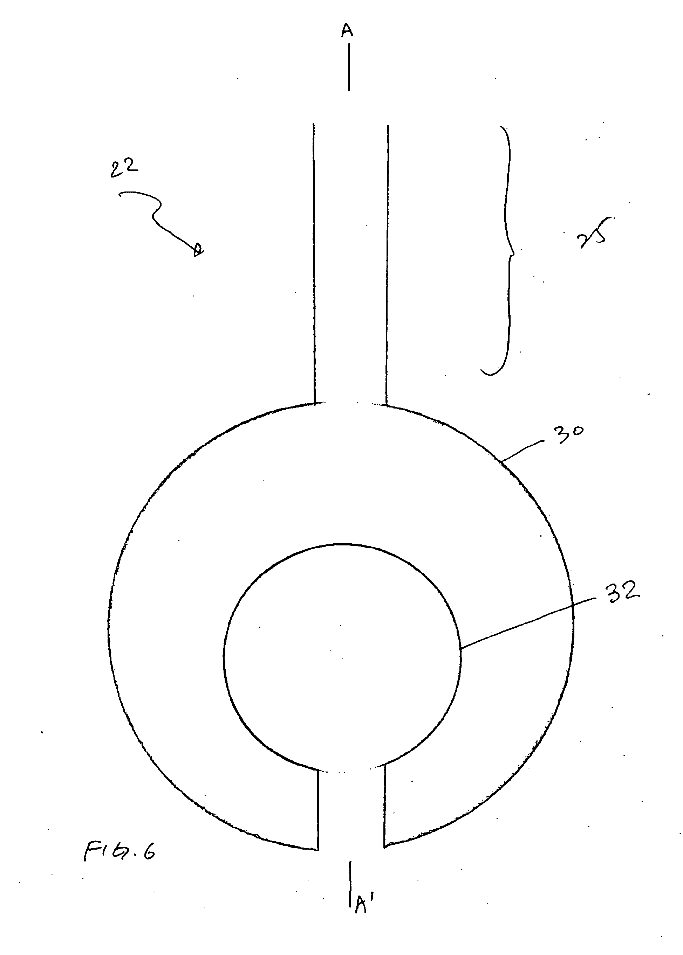

Referring specifically to Figures 3 to 5, there is shown a first embodiment of a whisk in accordance with the present invention generally designated as 17. The whisk 17 comprises an elongate handle 18 and a utility portion 20 formed of a plurality of wire loops 22 extending from the handle 18. The utility portion 20 has an elongate region or neck region 24 adjacent the handle and a balloon-shaped region 26 defining a relatively large space therein. The elongate region is generally cylindrical in shape. The upper portion of the wire loops 22 together defines the elongate region 24 and the lower portion of the loops 22 defines the balloon-shaped region 26. The balloon-shaped region 26 is provided with a smaller generally spherical formation or body 28 therein. The formation 28 has a generally similar shape to the balloon-shaped region 26 of the utility portion 20 although it is much smaller. In contrast to the prior designs the spherical formation 28 is formed integrally with the balloon-shaped region 26. In the illustrated embodiment, there are seven wire loops 22 with each loop extending from the handle 18. Each wire loop 22 is roughly in a configuration as shown in Figure 6 in that it consists of a straight upper region 25, a circular outer loop 30 and a circular but smaller inner loop 32. It is to be noted that while the outer loop 30 of the wire loops 22 has approximately the same size, the inner loops 32 are slightly different in size such that they can overlap and constitute the smaller spherical formation 28. Although as illustrated each wire loop 22 makes only a single inner loop 32, it could alternatively be arranged that each wire loop 22 include a number of inner loops.

A whisk in accordance the present invention is desirable for a number of reasons. First, the number of wires at the lower region of the balloon-shaped region is increased and as such whisking of foodstuffs is enhanced. Second, since the inner formation 28 is integral, it moves together with the outer wire loops, whereby it is easier to control whisking. Third, the inner member is not detachable from the whisk and therefore cannot become lost or present a swallowing hazard to children. Fourth, the entire utility portion is formed by relatively few wire loops (only seven in the illustrated embodiment) and as such the manufacture cost is relatively low. Finally, due to the use of relatively few wire loops, cleaning thereof after use is relatively easy.

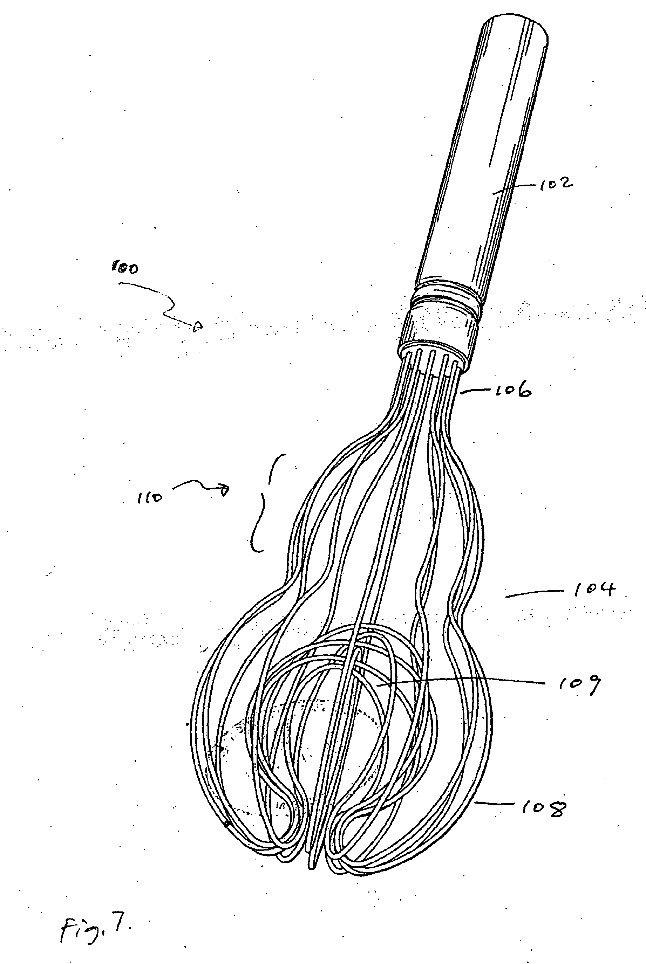

It is however envisaged that a number of minor modifications can be made to the present invention. For example, an inner member with a different shape and/or configuration may also be used to suit a particular whisking need. Further, the shape of the utility portion may be modified, as shown in Figure 7, to be explained as follows.

Figure 7 shows a second embodiment of a whisk 100 in accordance with the present invention. The whisk 100 in this embodiment is generally similar to the whisk 17 in the first embodiment in that the whisk 100 also comprises a handle 102 and a utility portion 104 having a neck region 106, a balloon-shaped region 108 arranged at the front, and an internal body 109. It is however to be noted that the neck region 106 in this embodiment is relatively short leaving room for the provision of a middle region 110 in the utility portion 104. The middle region 110 is arranged between the neck region 106 and the balloon-shaped region 108 or the internal body, and is wider than the neck region 106 but narrower than the balloon-shaped region 108 at the front. The middle region 110 is similar in width to the internal body 109. The provision of the wider middle region 110 at least increases the whisking efficiency in some operation. For example, the whisk 100 may be particularly suitable for mixing fluid foodstuffs contained in a container and depth of the foodstuffs is relatively great or the foodstuffs are relatively viscous.

## Claims

1. A culinary whisk (17) comprising:
a handle (18);
a plurality of wire loops (22) extending from the handle (18) defining a generally balloon-shaped utility portion (20); **characterised by**
an internal body (28) disposed within the utility portion (20) formed integrally with the plurality of wire loops (22).

2. A whisk as claimed in Claim 1, wherein said internal body (28) is of a generally spherical shape.

3. A whisk as claimed in Claim 1 or 2, wherein said internal body (28) is constituted of portions of said loops (22) defining a three-dimensional body.

4. A whisk as claimed in Claim 1 or 2 comprising six or seven said wire loops (22).

5. A whisk as claimed in Claim 1 or 2, wherein the utility portion (20) comprises a neck region (24) adjacent to said handle (18), and wherein the neck region (24) is generally cylindrical in shape with a width or diameter comparable to or slightly smaller than that of said handle (18).

6. A whisk as claimed in Claim 5, wherein the utility portion (20) is provided with a middle region generally arranged between the neck region (24) and said internal body (28).

7. A whisk as claimed in Claim 5, wherein the utility portion (20) is provided with a middle region arranged adjacent to the neck region (24), the middle region having a width substantially larger than that of the neck region (24) or comparable to that of said internal body (28).

8. A whisk as claimed in Claim 1 or 2, wherein said internal body (28) is arranged at an end of the utility portion (20) away from said handle (18).

## Patentansprüche

1. Rührbesen (17) mit:
einem Griffelement (18);
einer Mehrzahl von Drahtschlaufen (22), welche sich von dem Griffelement (18) aus erstrecken und welche einen im Wesentlichen ballonförmigen Nutzabschnitt (20) definieren; wobei der Rührbesen **gekennzeichnet ist durch** einen inneren Körper (28), welcher im Inneren des Nutzabschnitts (20) angeordnet ist und welcher als Einheit mit der Vielzahl von Drahtschlaufen (22) ausgestaltet ist.

2. Rührbesen nach Anspruch 1, wobei der innere Körper (28) eine im Wesentlichen sphärische Form aufweist.

3. Rührbesen nach Anspruch 1 oder 2, wobei der innere Körper (28) aus Teilen der Schlaufen (22) gebildet wird, welche einen dreidimensionalen Körper definieren.

4. Rührbesen nach Anspruch 1 oder 2 mit sechs oder sieben Drahtschlaufen (22).

5. Rührbesen nach Anspruch 1 oder 2, wobei der Nutzabschnitt (20) einen Halsbereich (24) aufweist, welcher an das Griffelement (18) angrenzt und wobei der Halsbereich (24) eine im Wesentlichen zylindrische Form aufweist, mit einer Breite oder einem Durchmesser vergleichbar zu oder ein wenig schmaler als die Breite oder der Durchmesser des Griffelements (18).

6. Rührbesen nach Anspruch 5, wobei der Nutzabschnitt (20) einen mittleren Bereich aufweist, welcher im Wesentlichen zwischen dem Halsbereich (24) und dem inneren Körper (28) angeordnet ist.

7. Rührbesen nach Anspruch 5, wobei der Nutzabschnitt (20) einen mittleren Bereich aufweist, welcher an den Halsbereich (24) angrenzt, wobei die Breite des mittleren Bereichs wesentlich breiter als die Breite des Halsbereichs (24) oder vergleichbar zu der Breite des inneren Körpers (28) ist.

8. Rührbesen nach Anspruch 1 oder 2, wobei der innere Körper (28) an einem Ende des Nutzabschnitts (20) angeordnet ist, welches von dem Griffelement (18) entfernt ist.

## Revendications

1. Fouet culinaire (17), comprenant:
un manche (18);
plusieurs boucles de fil métallique (22), s'étendant à partir du manche (18) et définissant une partie utilitaire ayant en général une forme en ballon (20) ; **caractérisé par** :
un corps interne (28) agencé dans la partie utilitaire (20), formé d'une seule pièce avec les plusieurs boucles de fil métallique (22).

2. Fouet selon la revendication 1, dans lequel ledit corps interne (28) a une forme généralement sphérique.

3. Fouet selon les revendications 1 ou 2, dans lequel ledit corps interne (28) est constitué par des parties desdites boucles (22) définissant un corps tridimensionnel.

4. Fouet selon les revendications 1 ou 2, comprenant six ou sept dites boucles de fil métallique (22).

5. Fouet selon les revendications 1 ou 2, dans lequel la partie utilitaire (20) comprend une région de col (24) adjacente audit manche (18), la région de col (24) ayant une forme généralement cylindrique et une largeur ou un diamètre comparable ou légèrement inférieure à celle dudit manche (18).

6. Fouet selon la revendication 5, dans lequel la partie utilitaire (20) comporte une région centrale agencée en général entre la région de col (24) et ledit corps interne (28).

7. Fouet selon la revendication 5, dans lequel la partie utilitaire (20) comporte une région centrale agencée près de la région de col (24), la région centrale ayant une largeur notablement supérieure à celle de la région de col (24) ou comparable à celle dudit corps interne (28).

8. Fouet selon les revendications 1 ou 2, dans lequel ledit corps interne (28) est agencé au niveau d'une extrémité de la partie utilitaire (20), à l'écart dudit manche (18).
